# EUROPÄISCHE PATENTSCHRIFT

(11) **EP 3 499 056 B1**
(45) Veröffentlichungstag und Bekanntmachung des Hinweises auf die Patenterteilung: **24.02.2021**
(21) Anmeldenummer: 18211971.9
(22) Anmeldetag: 12.12.2018
(51) Int. Cl.: F16B 25/00, E06B 1/60, F16B 35/04, F16B 5/02

(54) **SCHRAUBE ZUR MONTAGE EINES FENSTER- ODER TÜRRAHMENS**
SCREW FOR FITTING A WINDOW OR DOOR FRAME
VIS DE MONTAGE D'UN CHÂSSIS DE FENÊTRE OU DE PORTE

(30) Priorität: 12.12.2017 DE 102017129543
(43) Veröffentlichungstag der Anmeldung: 19.06.2019
(73) Patentinhaber: Adolf Würth GmbH & Co. KG, 74653 Künzelsau (DE); Würth International AG, 7000 Chur (CH)
(72) Erfinder: Vybiralik, Sascha, 71717 Beilstein (DE)
(74) Vertreter: Dilg, Haeusler, Schindelmann Patentanwaltsgesellschaft mbH

(56) Entgegenhaltungen:
- DE-U1- 8 708 372
- US-A- 3 256 661

## Beschreibung

Die Erfindung betrifft eine Schraube zur Montage eines Fenster- oder Türrahmens.

Häufig werden Fenster- oder Türrahmen mittels Schrauben in einer gewünschten Montageebene in einer Laibung 3 befestigt, wobei die Schrauben durch den Fenster- oder Türrahmen direkt in die Laibung oder in Dübel in der Laibung geschraubt werden. Ist eine der Schrauben nicht richtig positioniert, so wird der Fenster- oder Türrahmen an dieser Stelle nicht in der Montageebene liegen, sondern im Bereich dieser Schraube außerhalb der Montageebene. Eine Montage eines Fensters oder einer Tür in den Fenster- oder Türrahmen ist dann nicht möglich, weil der Fenster- bzw. Türrahmen verzogen ist. Die genaue Positionierung der Schrauben ist daher essentiell, um sicherzustellen, dass der Fenster- oder Türrahmen (und somit das Fenster oder die Tür) im fertigen Zustand in der Montageebene liegt, bspw. senkrecht zu einem Untergrund wie einer Etage eines Wohnhauses.

Aus der DE102010030281A1 ist ein System zur Fenstermontage mit einem Dübel und einer Schraube bekannt, wobei der Dübel ablängbar ist und wobei die Schraube einen Laibungsabschnitt zur Anordnung in der Laibung oder zur Anordnung in einem Dübel in der Laibung und einen Rahmenabschnitt zur Anordnung in dem Fenster- oder Türrahmen aufweist Das Dokument US3256661 offenbart auch ein System zur Fenstermontage des Stands der Technik.

Nachteilig bei der bekannten Montage eines Fenster- oder Türrahmens ist, dass eine Fehlpositionierung einer Schraube aufwändig korrigiert werden muss, bspw. indem Ausgleichsbohrungen vorgenommen werden, um die Schraube ein wenig in die gewünschte Richtung zu versetzen, oder bspw. indem die fehlpositionierte Schraube entfernt und eine neue Schraube an anderer Stelle neu gesetzt wird. Durch diese Maßnahmen kann der mindestens abschnittsweise nicht in der Montageebene liegende Fenster- oder Türrahmen 5 wieder vollständig in die Montageebene bewegt werden.

Aufgabe der vorliegenden Erfindung ist es, die Fehlpositionierung einer Schraube bei der Montage eines Fenster- oder Türrahmens leichter korrigieren zu können.

Die Aufgabe wird erfindungsgemäß durch eine Schraube gemäß Anspruch 1, einem mit mind. einer derartigen Schraube in einer Laibung befestigten Fenster- oder Türrahmen sowie ein zugehöriges Verfahren zu Befestigung eines Fenster- oder Türrahmens in einer Laibung mit mindestens einer erfindungsgemäßen Schraube gelöst.

Unter einem "axialen Versatz" zwischen Laibungsachse und Rahmenachse kann im Rahmen der vorliegenden Anmeldung insbesondere ein Versatz zwischen den genannten Achsen verstanden werden. Ein solcher axialer Versatz bzw. Achsenversatz kann einen seitlichen Versatz zwischen Laibungsachse und Rahmenachse bezeichnen. Anschaulich kann ein solcher axialer Versatz eine Parallelverschiebung zwischen Laibungsachse und Rahmenachse in seitlicher bzw. radialer Richtung bezeichnen.

Vorteilhaft weist der Laibungsabschnitt ein Gewinde auf und der Rahmenabschnitt ist bolzenförmig gebildet oder weist ebenfalls ein Gewinde auf.

Das Gewinde im Laibungsabschnitt und das Gewinde im Rahmenabschnitt sind bevorzugt jeweils ein Holzgewinde und weisen insbesondere eine gleiche Gewindesteigung und Gewindehöhe auf.

Vorteilhaft ist der Antrieb ein AW-, Philipps-, Torx- oder Schlitz-Antrieb.

Mit Vorteil ist zwischen dem Rahmenabschnitt und dem Laibungsabschnitt ein gewindefreier Abschnitt gebildet.

Ein Schaftdurchmesser im Rahmenabschnitt ist größer als ein Schaftdurchmesser im Laibungsabschnitt, insbesondere im Bereich von 5 bis 20%.

Ein Schaftquerschnitt im Rahmenabschnitt und/oder ein Schaftquerschnitt im Laibungsabschnitt ist bzw. sind mit Vorteil kreisförmig.

Bevorzugt weist der axiale Versatz eine Größe von 1-10mm, vorzugsweise 1-4mm und insbesondere 2mm auf.

Das Befestigen des Fenster- oder Türrahmens gemäß Schritt c) des unabhängigen Verfahrensanspruchs erfolgt bevorzugt ausschließlich mittels erfindungsgemäßen Schrauben.

Das Befestigen gemäß Schritt c) des unabhängigen Verfahrensanspruchs kann in Durchsteck-oder Vorsteckmontage erfolgen, d.h. entweder wird ein Dübel durch den Fenster- oder Türrahmen, der in der Laibung angeordnet ist, in die Laibung gesteckt oder alternativ in ein Loch in der Laibung gesetzt und dann erst wird der Fenster- oder Türrahmen in der Laibung angeordnet.

Die im Schritt c) des unabhängigen Verfahrensanspruchs verwendeten Schrauben, insbesondere erfindungsgemäße Schrauben, werden durch den Fenster- oder Türrahmen direkt in die Laibung, bspw. aus Hohlkammersteinen, Vollsteinen oder Holz, geschraubt oder alternativ durch den Fenster- oder Türrahmen in Dübel geschraubt werden, die in der Laibung, bspw. aus Hohlkammersteinen, Vollstein, Holz oder Beton, angeordnet sind.

Weitere Merkmale, Einzelheiten und Vorzüge der Erfindung ergeben sich aus den Ansprüchen und der nachfolgenden Beschreibung bevorzugter Ausführungsformen sowie anhand der Zeichnung. Es zeigen:
- Fig. 1: eine Seitenansicht der erfindungsgemäßen Schraube sowie eine Draufsicht auf den Antrieb im Kopf der Schraube und
- Fig. 2: eine Ansicht eines Ausschnitts einer Laibung, in der ein Fenster- oder Türrahmen mittels zwei erfindungsgemäßer Schrauben befestigt ist.

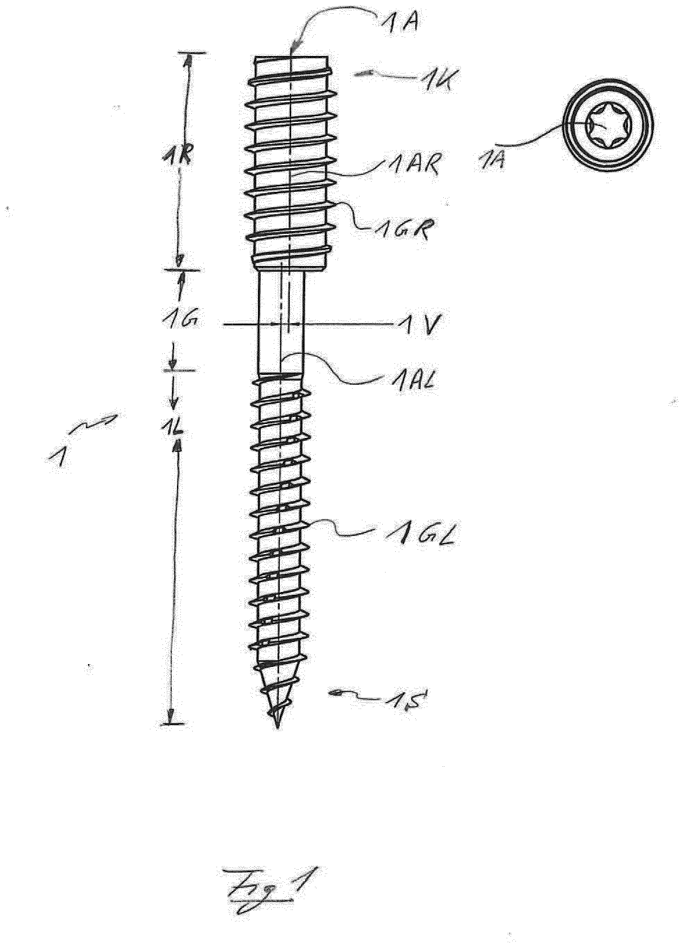

Figur 1 zeigt eine Seitenansicht einer erfindungsgemäßen Schraube 1 sowie eine Draufsicht auf den Kopf 1K der Schraube 1, in dem der Antrieb 1A angeordnet ist. Die Schraube 1 weist den Kopf 1K an einem Ende und eine Schraubenspitze 1S am anderen Ende auf. Ein Rahmenabschnitt 1R der Schraube 1 ist zur Anordnung in einem Fenster- oder Türrahmen 5 und ein Laibungsabschnitt 1L ist zur Anordnung in einer Laibung vorgesehen, entweder direkt in der Laibung oder in einen Dübel in der Laibung. Auf dem Rahmenabschnitt 1R und auf dem Laibungsabschnitt 1L ist jeweils ein Holzgewinde 1GL, 1GR gebildet, wobei die beiden Gewinde 1GL und 1GR die gleiche Gewindesteigung und die gleiche Gewindehöhe aufweisen. Zwischen den beiden Abschnitten 1L, 1R ist ein gewindefreier Abschnitt 1G gebildet. Um in einer Hauswand, die senkrecht zu einem Fußboden einer Etage eines Hauses verläuft, ein Fenster zu befestigen, wird wie folgt vorgegangen:

In der Hauswand wird die Laibung 3 geschaffen, in der das Fenster angeordnet werden soll. Die Laibung weist vier Seitenwände auf, die orthogonal zueinander stehen, d.h. passend zu den vier orthogonal zueinander stehenden Seiten eines Fensterrahmens 5 des Fensters.

Der Fensterrahmen 5 wird in der Laibung 3 angeordnet und mit Verglasungsklötzen in der Laibung 3 vorjustiert, d.h. zum einen werden geeignete Abstände zwischen Fensterrahmen 5 und Laibung 3 eingestellt und zum anderen wird der Fensterrahmen 5 in einer Montageebene 1M angeordnet, die ebenfalls senkrecht zum Fußboden verläuft.

Nun wird die notwendige Anzahl und die Lage von Befestigungspunkten festgelegt, d.h. die Anzahl und Lage der Stellen, an denen der Fensterrahmen mit der Laibung verschraubt wird. Anschließend werden mit Hilfe einer Bohrmaschine die entsprechenden Befestigungspunkte vorbereitet, in dem mit der Bohrmaschine Löcher durch den Fensterrahmen 5 und in die Laibung gebohrt werden. Hierbei ist darauf zu achten, dass der Fensterrahmen 5 beim Bohren der Löcher nicht verrutscht.

Sind die Befestigungspunkte derart vorbereitet, werden Dübel durch die Löcher in dem Fensterrahmen 5 und in die Löcher in der Laibung 3 gesteckt. Danach werden Schrauben durch den Fensterrahmen 5 und in die Dübel gesetzt und in diese geschraubt, um den Fensterrahmen 5 in der Laibung zu befestigen. Als Schrauben können herkömmliche Fensterbauschrauben verwendet werden.

Sind alle Befestigungspunkte gesetzt, d.h. alle Schrauben in den zugehörigen Dübel geschraubt, wird mit Hilfe einer Wasserwaage geprüft, ob der Fensterrahmen 5 im Lot ist, d.h. senkrecht zum Fußboden verläuft. Mit anderen Worten: Es wird geprüft, ob sich der Fensterrahmen 5 in der Montageebene 1M befindet.

Befindet sich der Fensterrahmen 5 an einem Befestigungspunkt nicht in der Montageebene 1M und ist die Distanz, die er von der Montageebene entfernt ist, geringer als der Versatz 1V der erfindungsgemäßen Schraube, so wird die Fensterbauschraube des Befestigungspunktes entfernt und eine erfindungsgemäße Schraube durch den Fensterrahmen 5 und in den Dübel geschraubt, bis die Schraube 1 gesetzt ist, d.h. der Kopf 1K bündig mit dem Fensterrahmen 5 abschließt.

In dieser Position kann nun die Lage des Fensterrahmens 5 zur Montageebene 1M justiert werden, indem die Schraube 1 so drehbetätigt wird, dass der Fensterrahmen sich in die Montageebene 1M bewegt. Die zur Justage notwendige Drehbewegung sollte 180° nicht übersteigen, da eine Drehbewegung von 180° ausreicht, um den axialen Versatz 1V in der Draufsicht auf den Schraubenkopf von einer Seite zur gegenüberliegenden Seite zu drehen.

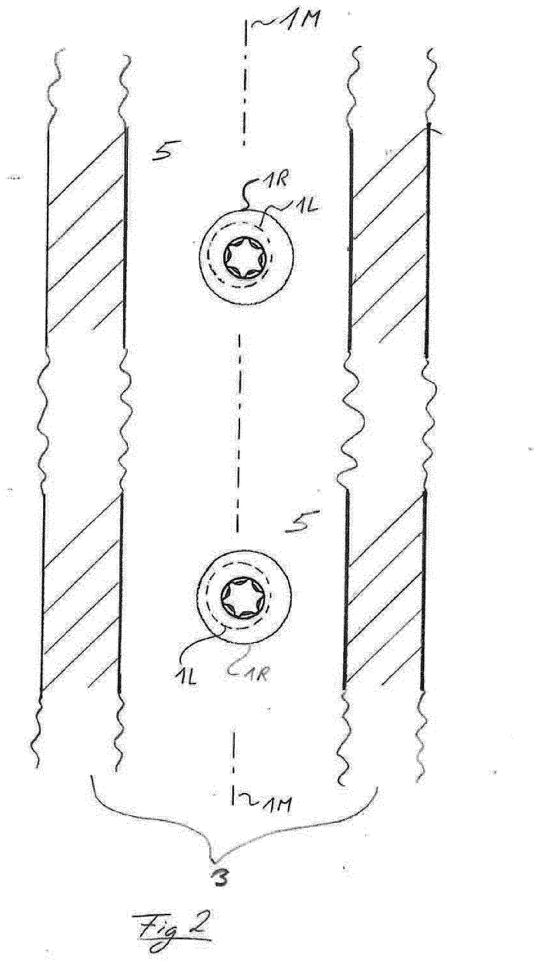

Figur 2 zeigt eine Draufsicht auf die Laibung 3, in der der Fensterrahmen 5 angeordnet ist. Die Figur zeigt unterbrochen die Verriegelungsseite des Fensterrahmens 5, d.h. die Seite des Fensterrahmens, in die der Fensterriegel zum Verriegeln des Fensters greift. In Figur 2 sind die beiden Befestigungspunkte dieser Seite des Fensterrahmens gezeigt: diese Seite des Fensterrahmens 5 ist in einem oberen Abschnitt der Figur 2 mittels einer Schraube 1 in der Laibung 3 befestigt und in einem unteren Abschnitt ebenfalls mittels einer Schraube 1 in der Laibung 3 befestigt. Vorliegend wurden somit beide Fensterbauschrauben durch die erfindungsgemäße Schraube 1 ersetzt und, nachdem diese gesetzt wurden, so um maximal 180° gedreht, dass der Fensterrahmen 5 in der Montageebene 1M liegt.

Wie der Fig. 2 zu entnehmen ist, ist der Fensterrahmen 5 lotgerecht, d.h. senkrecht zum Fußboden angeordnet: Der in Fig. 2 linke und rechte Rand des Fensterrahmens weist jeweils den gleichen Abstand zu der Montageebene 1M auf, d.h. der Fensterrahmen 5 ist symmetrisch zur Montageebene 1M angeordnet. Nun kann ein Fenster in den Fensterrahmen 5 gesetzt werden.

Die erfindungsgemäße Schraube 1 schafft somit bei der Fehlpositionierung einer Fensterbauschraube durch ihren axialen Versatz 1V zwischen dem Laibungsabschnitt 1L und Rahmenabschnitt 1R Abhilfe bei Fehlpositionierungen: Ist eine herkömmliche Fensterbauschraube fehlpositioniert, so wird diese Fensterbauschraube entfernt und die erfindungsgemäße Schraube 1 eingesetzt. Ist die erfindungsgemäße Schraube 1 durch den Fenster- oder Türrahmen 5 und in die Laibung gesetzt, so kann durch Drehbetätigen der Schraube 1 um maximal 180° der Fenster- oder Türrahmen 5 an der betreffenden Stelle in jede Richtung senkrecht zur Achse 1AR des Rahmenabschnitts 1R bewegt werden, maximal jedoch um den axialen Versatz 1V.

Ist beispielsweise eine herkömmliche Schraube zur Befestigung des Fenster- oder Türrahmens 5 in Höhe eines vertikalen Versatzes 1V aus der gewünschten Montageebene versetzt, so kann eine erfindungsgemäße Schraube 1 an die Stelle der bisherigen Fensterbauschraube gesetzt werden und, nachdem die Schraube 1 durch den Fenster- oder Türrahmen 5 in die Laibung 3 gesetzt ist, diese noch um einen Drehwinkel von bis zu 180° gedreht werden, um den Fenster-oder Türrahmen 5 an dieser Stelle um den axialen Versatz 1V in die Montageebene zu versetzen.

Ist ein vertikal zu einer Etage eines Wohnhauses eingebauter Türrahmen einer Haustür eines Hauses an einer Längsseite, bspw. der Seite mit dem Türschloss, durch zwei erfindungsgemäße Schrauben 1 befestigt, bspw. am oberen, deckenseitigen Ende und am unteren, bodenseitigen Ende, so kann der Türrahmen 5 am oberen Ende bspw. um den vertikalen Versatz 1V in das Haus hinein bewegt werden, in dem die erfindungsgemäße Schraube 1 am oberen Ende des Türrahmens entsprechend um maximal 180° drehbetätigt wird, bis der axiale Versatz 1V in das Haus hinein steht, und der Türrahmen 5 am unteren Ende bspw. um den vertikalen Versatz 1V aus dem Haus heraus bewegt werden, in dem die erfindungsgemäße Schraube 1 am unteren Ende des Türrahmens entsprechend um maximal 180° drehbetätigt wird, bis der axiale Versatz 1V aus dem Haus heraus steht.

In einem derartigen Fall sind somit vier Konstellationen denkbar: 1.) Der axiale Versatz 1V beider Schrauben 1 ist in das Haus gerichtet. 2.) Der axiale Versatz 1V beider Schrauben 1 ist aus dem Haus heraus gerichtet. 3.) Der axiale Versatz 1V der oberen Schraube 1 ist in das Haus gerichtet und der axiale Versatz der unteren Schraube 1 ist aus dem Haus heraus gerichtet. 4.) Der axiale Versatz 1V der oberen Schraube 1 ist aus dem Haus heraus gerichtet und der axiale Versatz der unteren Schraube 1 ist in das Haus hinein gerichtet. Durch diese Variationsmöglichkeiten kann eine große Anzahl möglicher Fehlpositionierungen von Fensterbauschrauben auf einfache Weise korrigiert werden.

Auf die zuvor beschriebene Weise kann der Fenster- oder Türrahmen 5 im montierten Zustand somit an dem Befestigungspunkt der erfindungsgemäßen Schraube 1 durch Drehbetätigen derselben senkrecht zur gewünschten Montageebene 1M bewegt werden, maximal um den Versatz 1V. Auf diese Weise kann die Vornahme von Ausgleichsbohrungen oder das Setzen einer neuen Schraube an anderer Stelle bei Fehlpositionierungen von Schrauben vermieden werden.

Die erfindungsgemäße Schraube kann Teil eines Montagekits sein, wie es in der DE102010030281 offenbart ist.

Die Gewinde 1GL, 1GR können, wie oben beschrieben, gleich sein, d.h. eine gleiche Steigung und eine gleiche Gewindehöhe und eine gleiche Gewindeform aufweisen. Alternativ können sich die Gewinde 1GL und 1GR jedoch auch unterscheiden, bspw. in Gewindesteigung und/oder Gewindehöhe und/oder Gewindeform.

### Bezugszeichenliste

- 1: Schraube zur Montage eines Fenster- oder Türrahmens
- 1A: Antrieb der Schraube
- 1AL: Achse des Laibungsabschnitts
- 1AR: Achse des Rahmenabschnitts
- 1G: gewindefreier Schaftabschnitt
- 1GL: Gewinde im Laibungsabschnitt
- 1GR: Gewinde im Rahmenabschnitt
- 1K: Kopf der Schraube
- 1L: Laibungsabschnitt
- 1M: Montageebene des Fenster- oder Türrahmens
- 1R: Rahmenabschnitt
- 1S: Schraubenspitze
- 1V: axialer Versatz zwischen Rahmenabschnitt 1R und Laibungsabschnitt 1L
- 3: Laibung
- 5: Fenster- oder Türrahmen

## Patentansprüche

1. Schraube (1) zur Montage eines Fenster- oder Türrahmens mit einem Schraubenkopf (1K) mit einem Antrieb (1A) zum Drehbetätigen der Schraube und einer gegenüberliegenden Schraubenspitze (1S) sowie einem Rahmenabschnitt (1R) zur Anordnung in dem Fensteroder Türrahmen und einem Laibungsabschnitt (1L) zur Anordnung in einer Laibung, wobei ein Schaftdurchmesser im Rahmenabschnitt (1R) größer ist als ein Schaftdurchmesser im Laibungsabschnitt und wobei der Laibungsabschnitt (1L) eine Laibungsachse (1AL) und der Rahmenabschnitt (1R) eine Rahmenachse (1AR) aufweist, **gekennzeichnet durch** einen axialen Versatz (1V) zwischen der Laibungsachse (1AL) und der Rahmenachse (1AR).

2. Schraube nach Anspruch 1, **dadurch gekennzeichnet, dass** der Laibungsabschnitt (1L) ein Gewinde (1GL) aufweist und der Rahmenabschnitt (1R) bolzenförmig gebildet ist oder ebenfalls ein Gewinde (1GR) aufweist.

3. Schraube nach Anspruch 1 oder 2, **dadurch gekennzeichnet, dass** das Gewinde (1GL) und das Gewinde (1GR) jeweils ein Holzgewinde sind und insbesondere eine gleiche Gewindesteigung und Gewindehöhe aufweisen.

4. Schraube nach einem der vorangehenden Ansprüche, **dadurch gekennzeichnet, dass** der Antrieb ein AW-, Philipps-, Torx- oder Schlitz-Antrieb ist.

5. Schraube nach einem der vorangehenden Ansprüche, **dadurch gekennzeichnet, dass** zwischen dem Rahmenabschnitt (1R) und dem Laibungsabschnitt (1L) ein gewindefreier Abschnitt (1G) gebildet ist.

6. Schraube nach einem der vorangehenden Ansprüche, **dadurch gekennzeichnet, dass** der Schaftdurchmesser im Rahmenabschnitt (1R) größer ist als der Schaftdurchmesser im Laibungsabschnitt im Bereich von 5 bis 20%.

7. Schraube nach einem der vorangehenden Ansprüche, **dadurch gekennzeichnet, dass** ein Schaftquerschnitt im Rahmenabschnitt (1R) und/oder ein Schaftquerschnitt im Laibungsabschnitt (1L) kreisförmig ist bzw. sind.

8. Schraube nach einem der vorangehenden Ansprüche, **dadurch gekennzeichnet, dass** der axiale Versatz (1V) eine Größe von 1-10mm, vorzugsweise 1-4mm und insbesondere 2mm aufweist.

9. Fenster- oder Türrahmen (5) befestigt in einer Laibung (3) mit mindestens einer Schraube (1) nach einem der vorangehenden Ansprüche.

10. Verfahren zur Montage eines Fenster- oder Türrahmens in einer Laibung mit mindestens einer Schraube nach einem der vorangehenden Ansprüche, umfassend:
a) Bereitstellen einer Laibung (3),
b) Bereitstellen eines Fenster- oder Türrahmens (5) für die Laibung (3),
c) Befestigen des Fenster- oder Türrahmens (5) mittels mindestens einer Schraube (1) nach einem der vorangehenden Ansprüche in einer Montageebene (1M) der Laibung (3)
**gekennzeichnet durch**
d) Drehbetätigen der mindestens einen Schraube nach einem der vorangehenden Ansprüche, um den Fenster- oder Türrahmen (5) in die Montageebene (1M) einzustellen.

11. Verfahren nach dem vorherigen Anspruch, **dadurch gekennzeichnet, dass** das Befestigen in Schritt c) ausschließlich mittels Schrauben nach einem der vorangehenden Ansprüchen erfolgt.

12. Verfahren nach einem der vorangehenden Ansprüche, **dadurch gekennzeichnet, dass** das Befestigen in Schritt c) in Durchsteck- oder Vorsteckmontage erfolgt.

13. Verfahren nach einem der vorangehenden Ansprüche, **dadurch gekennzeichnet, dass** die im Schritt c) verwendeten Schrauben durch den Fenster- oder Türrahmen direkt in die Laibung, bspw. aus Hohlkammersteinen, Vollsteinen oder Holz, geschraubt werden oder durch den Fenster- oder Türrahmen in Dübel geschraubt werden, die in der Laibung, bspw. aus Hohlkammersteinen, Vollstein, Holz oder Beton, angeordnet sind.

## Claims

1. A screw (1) for mounting a window or door frame with a screw head (1K) with a drive (1A) for rotationally actuating the screw, and an opposing screw tip (1S), and a frame portion (1R) for arranging in the window or door frame, and a reveal portion (1L) for arranging in a reveal,
wherein a shaft diameter in the frame portion (1R) is larger than a shaft diameter in the reveal portion, and
wherein the reveal portion (1L) comprises a reveal axis (1AL) and the frame portion (1R) comprises a frame axis (1AR),
**characterized by** an axial offset (1V) between the reveal axis (1AL) and the frame axis (1AR).

2. The screw according to claim 1, **characterized in that** the reveal portion (1L) comprises a thread (1GL) and the frame portion (1R) is formed bolt-shaped or also comprises a thread (1GR).

3. The screw according to claim 1 or 2, **characterized in that** the thread (1GL) and the thread (1GR) respectively are a wood thread and in particular comprise a same thread pitch and thread height.

4. The screw according to one of the preceding claims, **characterized in that** the drive is an AW-, Philips-, torx-, or slit-drive.

5. The screw according to one of the preceding claims, **characterized in that** between the frame portion (1R) and the reveal portion (1L) a thread-free portion (1G) is formed.

6. The screw according to one of the preceding claims, **characterized in that** the shaft diameter in the frame portion (1R) is larger than the shaft diameter in the reveal portion in the range from 5 to 20%.

7. The screw according to one of the preceding claims, **characterized in that** a shaft cross-section in the frame portion (1R) and/or a shaft cross-section in the reveal portion (1L) is and are, respectively, circular.

8. The screw according to one of the preceding claims, **characterized in that** the axial offset (1V) comprises a size of 1-10 mm, preferably 1-4 mm and in particular 2 mm.

9. A window or door frame (5) attached in a reveal (3) with at least one screw (1) according to one of the preceding claims.

10. A Method of mounting a window or door frame in a reveal with at least one screw according to one of the preceding claims, encompassing:
a) providing a reveal (3),
b) providing a window or door frame (5) for the reveal (3),
c) attaching the window or door frame (5) by at least one screw (1) according to one of the preceding claims in a mounting plane (1M) of the reveal (3)
**characterized by**
d) rotationally actuating the at least one screw according to one of the preceding claims to adjust the window or door frame (5) in the mounting plane (1M).

11. The method according to the preceding claim, **characterized in that** attaching in step c) is performed exclusively by screws according to one of the preceding claims.

12. The method according to one of the preceding claims, **characterized in that** attaching in step c) is performed by push through or pre-positioned mounting.

13. The method according to one of the preceding claims, **characterized in that** the screws which are used in step c) are screwed through the window or door frame directly in the reveal, e.g. made of hollow bricks, full bricks or wood, or are screwed through the window or door frame in wall plugs which are arranged in the reveal, e.g. made of hollow bricks, full bricks, wood or concrete.

## Revendications

1. Vis (1) pour le montage d'un châssis de fenêtre ou de porte avec une tête de vis (1K) avec un entraînement (1A) pour l'actionnement rotatif de la vis et une pointe de vis (1S) opposée ainsi qu'une section de châssis (1R) pour l'agencement dans le châssis de fenêtre ou de porte et une section d'intrados (1L) pour l'agencement dans un intrados, dans laquelle un diamètre de tige dans la section de châssis (1R) est supérieur à un diamètre de tige dans la section d'intrados et dans laquelle la section d'intrados (1L) présente un axe d'intrados (1AL) et la section de châssis (1R) présente un axe de châssis (1AR), **caractérisée par** un déport axial (1V) entre l'axe d'intrados (1AL) et l'axe de châssis (1AR).

2. Vis selon la revendication 1, **caractérisée en ce que** la section d'intrados (1L) présente un filet (1GL) et la section de châssis (1R) est formée en forme de boulon ou présente aussi un filet (1GR).

3. Vis selon la revendication 1 ou 2, **caractérisée en ce que** le filet (1GL) et le filet (1GR) sont respectivement un filet en bois et présentent en particulier un pas de filet et une hauteur de filet identiques.

4. Vis selon l'une des revendications précédentes, **caractérisée en ce que** l'entraînement est un entraînement AW, Philipps, Torx ou à fente.

5. Vis selon l'une des revendications précédentes, **caractérisée en ce qu'**une section (1G) sans filet est formée entre la section de châssis (1R) et la section d'intrados (1L).

6. Vis selon l'une des revendications précédentes, **caractérisée en ce que** le diamètre de tige dans la section de châssis (1R) est supérieur au diamètre de tige dans la section d'intrados dans la plage de 5 à 20 %.

7. Vis selon l'une des revendications précédentes, **caractérisée en ce qu'**une section transversale de tige dans la section de châssis (1R) et/ou une section transversale de tige dans la section d'intrados (1L) est ou sont circulaire(s).

8. Vis selon l'une des revendications précédentes, **caractérisée en ce que** le déport axial (1V) présente une dimension de 1 à 10 mm, de préférence de 1 à 4 mm et en particulier de 2 mm.

9. Châssis de fenêtre ou de porte (5) fixé dans un intrados (3) avec au moins une vis (1) selon l'une des revendications précédentes.

10. Procédé de montage d'un châssis de fenêtre ou de porte dans un intrados avec au moins une vis selon l'une des revendications précédentes, comprenant :
a) la fourniture d'un intrados (3),
b) la fourniture d'un châssis de fenêtre ou de porte (5) pour l'intrados (3),
c) la fixation du châssis de fenêtre ou de porte (5) au moyen d'au moins une vis (1) selon l'une des revendications précédentes dans un plan de montage (1M) de l'intrados (3),
**caractérisé par**
d) l'actionnement rotatif d'au moins une vis selon l'une des revendications précédentes, afin de régler le châssis de fenêtre ou de porte (5) dans le plan de montage (1M).

11. Procédé selon la revendication précédente, **caractérisé en ce que** la fixation à l'étape c) est effectuée exclusivement au moyen de vis selon l'une des revendications précédentes.

12. Procédé selon l'une des revendications précédentes, **caractérisé en ce que** la fixation à l'étape c) est effectuée par un montage par enfichage ou à fleur.

13. Procédé selon l'une des revendications précédentes, **caractérisé en ce que** les vis utilisées à l'étape c) sont vissées à travers le châssis de fenêtre ou de porte directement dans l'intrados, par exemple en pierres creuses, en pierres pleines ou en bois ou sont vissées à travers le châssis de fenêtre ou de porte dans des chevilles qui sont agencées dans l'intrados, par exemple en pierres creuses, en pierres pleines, en bois ou en béton.
